# EUROPEAN PATENT APPLICATION

(11) **EP 1 431 402 A1**
(43) Date of publication of application: **23.06.2004**
(21) Application number: 02425759.4
(22) Date of filing: 11.12.2002
(51) Int. Cl.: C21C 5/46

(54) **Device apt to feed powdered substances onto a metal-slag bath surface and use thereof**

(30) Priority: 11.12.2001 IT RM20010726
(71) Applicant: CENTRO SVILUPPO MATERIALI S.p.A., 00129 Roma (IT)
(72) Inventor: Colletta, Angelo, Centro Sviluppo Materiali S.p.A., 00129 Roma (IT)
(74) Representative: Leone, Mario

(57) **Abstract**

The present invention refers to a device (1), and to the use thereof, apt to feed powdered substances or the like onto the surface (4) of a metal-slag bath (2, 3) inside of a reactor in a particularly effective manner, comprising: means (5, 6, 7, 8) apt to feed powdered substances or the like comprising a channel (5) formed in a tubular body (6) having, at the proximal end thereof, at least one opening (7); means (9, 10, 11) for the thermal and the chemical protection of the channel (5); and means for positioning said at least one opening (7).

## Description

The present invention refers to a device for feeding powdered substances or the like onto the surface of a metal-slag bath inside of a reactor, like combustible substances, substances to be disposed of and/or useful substances, for the production of metals, slag, powders enriched with metal oxides (like ZnO).

Known powder feeding systems are operated through furnace walls (injection lance) or via top feed.

Both system types, which should enable to charge substances in amount and composition variable needwise, entail complex engineering structures; the former ones should also be provided with structural equipments integrating them to the furnace walls, the latter ones should also be provided with structural equipments integrating them to the furnace crown.

In view of their use, several designing efforts under way aim at providing a remarkable simplicity of design associated to a structural sturdiness. Moreover, they should be designed so as to effectively feed the powdered substances, in order to have the latter interact with the metal-slag bath.

Generally, the systems used inject powders under the surface, i.e. at the metal-slag level. In practice, these systems require a structural complexity that often makes the use thereof inexpedient.

The technical problem underlying the present invention is to provide a device apt to feed powdered substances and the like allowing to overcome the drawbacks mentioned with reference to the known art.

This problem is solved by a device apt to feed powdered substances or the like onto the surface of a metal-slag bath inside of a reactor, comprising:
* means apt to feed powdered substances or the like, comprising a channel formed by a tubular body having at the proximal end thereof at least one opening;
* means for the thermal and the chemical protection of the channel; and
* means for positioning said at least one opening.

The present invention further refers to an use of the device (1) to feed powdered substances or the like onto the surface of a metal-slag bath inside of a reactor.

The main advantage of the device according to the present invention lies in allowing a remarkably simple construction, a remarkable versatility as well as a valuable feeding efficiency.

The present invention will hereinafter be described according to a preferred embodiment thereof, together with some preferred applications thereof, given by way of a non-limiting example and with reference to the following examples and to the annexed drawings, wherein:

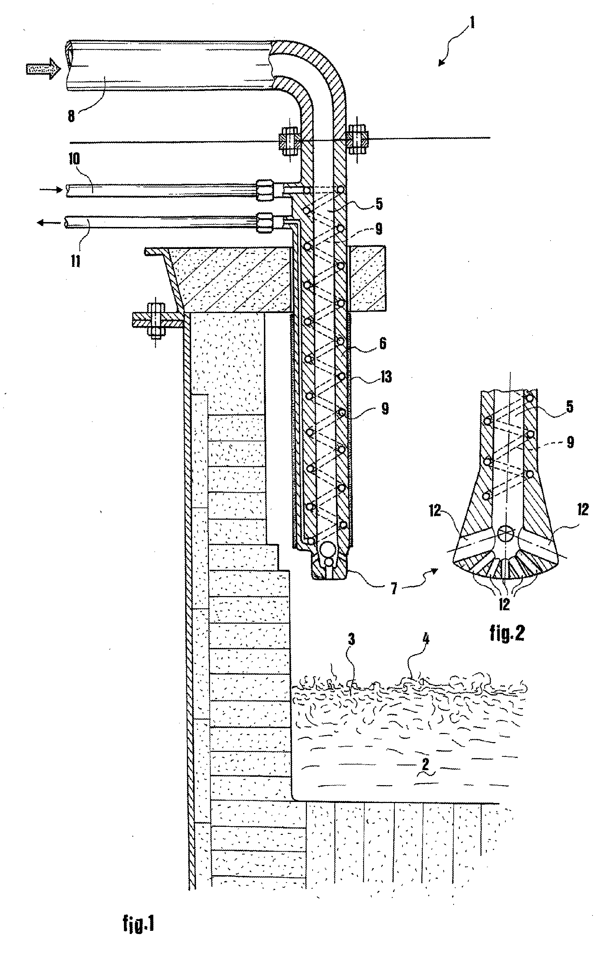

* Figure 1 is a schematic and partially sectional view of a device according to the invention in the exemplary context of an electric furnace for the production of iron alloys or metals, slag and powders enriched with oxides (of Zinc, steel); and
* Figure 2 is a sectional view of a detail of the device of Figure 1.

With reference to the figures, a device for feeding powdered substances or the like is indicated. Said device is mounted on the edge of a reactor which constitutes a plasma arc electric furnace, partially depicted, containing a metal-slag bath 2, 3 having a surface slag layer 3 and a free surface 4.

This device 1 comprises means for feeding powdered substances or the like comprising a channel 5 formed in a tubular body 6. The latter has, at one end thereof, proximal to the surface of the metal-slag bath 2, 3, an opening 7.

The channel 5 is fed by a suitable duct 8, connected to an optionally pressurised feeding system (not shown), which feeds the materials to be charged in the furnace toward the metal-slag bath 2,3 or thereinside via the opening 7.

The device 1 further comprises thermal protection means for the feeding channel 5. In the present embodiment said means comprises a cooling circuit 9, obtained inside of the walls of the tubular body 6 and crossed by a coolant.

The circuit 9 is fed by suitable inlet and outlet cooling ducts 10, 11, in turn connected to a cooling system (not shown) or to a source of cold fluid, e.g. water.

For an optimum sizing and operativeness, the cooling circuit 9 entails an overall pressure drop ranging from 0.5-3.5 bar and a raise in the temperature of the cooling fluid ranging from 10 to 15°C.

Variants of the present embodiment may provide protection means comprising at least one section of tubular body 6 made of refractory material, or a tubular body integrally made of refractory material.

Alternatively, the tubular body 6 is made of a set of coil-shaped cooling ducts drawn up thereamong according to a circumference, thereby forming it.

The materials employed should anyhow resist high temperatures. Some putative constituent materials of the tubular body are mentioned in the following table.

| Material | **Melting point °C** | **Ultimate elongation %** | Linear **CTE 1000°C, µm/m-°C** |
|---|---|---|---|
| Kovar® Alloy | 1450 | 30 | 11.26 |
| W-25 Re Tungsten Rhenium Alloy | 3050 | 1.05 | 5.04 |
| W-25 Re Tungsten Rhenium | 3050 | 20 | 5.04 |
| Niobium FS-85 (Nb-28Ta-10W-1Zr) | 2590 | 18 | 9 |
| Niobium FS-85 (Nb-28Ta-10W-1Zr) | 2590 | 22 | 9 |
| Mo-47.5 Re Molybdenum Rhenium | 2450 | 22 | 6.45 |
| Vanadium | 1735 | 27 | 10.09 |
| Thorium, Th | 1800 | 34 | 14.09 |
| Titanium, Ti | 1660 | 54 | 10.01 |
| Stellite® | 1310 | 36 | 17.04 |
| AISI Type 321 Stainless Steel | 1413 | 55 | 20.05 |
| AISI Type 329 Stainless Steel | 1480 | 25 | 14.04 |

The device 1 further comprises means for positioning the opening 7 at a predetermined distance in order to avoid an excessive scattering of the powders and a blow-by in gaseous currents of the latter.

Such optimum distance ranges from 1 to 300 mm from the surface of the metal-slag bath 2,3, i.e. from the free surface 4.

The means for positioning the opening 7 is equipped with conventional mechanical systems (not shown) allowing to adjust the distance between the opening and the metal-slag bath surface.

Moreover, the means for positioning the opening 7 supports the tubular body 6, insulating it also electrically with respect to the device 1, in order to avoid arcing between the bath surface 4 and the device 1.

The means for positioning the tubular body 6 is also apt to adjust the tilt, in particular of the axis of the feeding channel 5, of an angle formed with the vertical of from 0 to 20°.

Concerning instead the inside diameter of the channel 5, preferably it ranges from 120 to 350 mm, more preferably it is of 200 mm and depending on the hourly powder inlet flow rate.

Preferably, the ratio between the distance of the opening 7 from the surface of the metal-slag bath 2,3 and the inside diameter of the channel 5 ranges from 0.008 and 0.85.

Optionally, the described opening 7 could comprise a plurality of channels 12, diverging from the channel 5, for scattering the injected material.

It has to be pointed out that the geometry of the ducts feeding the powders should have the utmost viable curve and cap reduction in order to abate charge losses.

Moreover, when made of a metallic material a tubular body 6 will have an outside ceramics layer 13 providing a greater thermal and chemical protection, in particular from slag spurts.

Concerning instead the use of the above device according to a specific embodiment, it has to be pointed out that the device is oriented so as to face the metal-slag bath with the proximal end thereof provided with at least one opening 7. The opening 7 is positioned at a distance ranging from 1 to 300 mm from the surface 4 of the metal-slag bath 2, 3.

With the abovedescribed device, the powdered substances are transferred from said device to the metal-slag bath by gravity or by pneumatic conveyance in the presence of gas inert with respect to the powdered substances.

This inert gas is selected from the group comprising Argon, Nitrogen, Helium and combinations thereof.

To the abovedescribed device for feeding powdered substances or the like, a person skilled in the art, in order to meet further and contingent needs, may effect several further modifications and variants, all however encompassed by the protective scope of the present invention, as defined by the appended claims.

## Claims

1. A device (1), apt to feed powdered substances or the like onto the surface (4) of a metal-slag bath (2,3) inside of a reactor, comprising:
* means (5, 6, 7, 8) apt to feed powdered substances or the like, comprising a channel (5) formed by a tubular body (6) having at the proximal end thereof at least one opening (7);
* means (9, 10, 11) for the thermal and the chemical protection of the channel (5); and
* means for positioning said at least one opening (7).

2. The device (1) according to claim 1, wherein said opening (7) has a section smaller than, equal to or greater than that of the channel (5).

3. The device (1) according to claim 1 or 2, wherein said protection means comprises a cooling circuit (9).

4. The device (1) according to claim 3, wherein said cooling circuit is obtained inside of the walls of the tubular body (6), or alternatively said cooling circuit forms the walls of the tubular body (6).

5. The device (1) according to claim 4, wherein said walls are made of a metallic material, optionally externally coated with a ceramics layer (13).

6. The device (1) according to any one of the preceding claims, wherein said protection means comprises at least one section of tubular body (6) made of refractory material.

7. The device (1) according to claims 1 to 5, wherein said protection means comprises said tubular body (6) integrally made of refractory material.

8. The device (1) according to any one of the preceding claims, wherein said opening (7) comprises a plurality of channels (12) diverging from the feeding channel (5).

9. The device (1) according to claim 8, wherein said means for positioning said opening (7) supports said tubular body (6) and electrically insulates it with respect to the device.

10. The device (1) according to claim 9, wherein said means for positioning said opening (7) also allows to adjust the position thereof.

11. The device (1) according to claim 10, wherein the means for positioning said opening (7) are apt to adjust the tilt, in particular of the axis of the feeding channel (5), of an angle formed with the vertical of from 0 to 20°.

12. The device (1) according to any one of the preceding claims, wherein the inside diameter of the feeding channel (5) ranges from 120 to 370 mm, preferably from 250 to 290 mm.

13. An use of the device (1) according to claims 1 to 12, to feed powdered substances or the like onto the surface (4) of a metal-slag bath (2,3) inside of a reactor.

14. The use of the device (1) according to claim 13, wherein the device is oriented so as to face the metal-slag bath (2,3) with the proximal end thereof provided with at least one opening (7).

15. The use of the device (1) according to claim 14, wherein said at least one opening (7) is positioned at a distance ranging from 1 to 300 mm from the surface (4) of the metal-slag bath (2,3).

16. The use of the device (1) according to any one of the claims 13 to 15, wherein said cooling circuit (9) entails an overall pressure drop ranging from 0.5 to 3.5 bar.

17. The use of the device (1) according to claim 16, wherein, in said cooling circuit (9), the raise in the temperature of the cooling fluid ranges from 10 to 15°C.

18. The use of the device (1) according to any one of the preceding claims, wherein the inside diameter of the feeding channel (5) is selected so that its ratio with the distance of the proximal end from the surface of the metal-slag bath (2,3) ranges from 0.008 to 0.85.

19. The use of the device (1) according to any one of the preceding claims, wherein the powdered substances are transferred from said device to the metal-slag bath (2, 3) by gravity.

20. The use of the device (1) according to any one of the claims 13 to 18, wherein the powdered substances are transferred from the device to the bath by pneumatic conveyance in the presence of gas inert with respect to the powdered substances.

21. The use of the device (1) according to the preceding claim, wherein the inert gas is selected from the group comprising Argon, Nitrogen, Helium and combinations thereof.
